# EUROPEAN PATENT SPECIFICATION

(11) **EP 1 748 239 B1**
(45) Date of publication and mention of the grant of the patent: **17.02.2010**
(21) Application number: 06015355.8
(22) Date of filing: 24.07.2006
(51) Int. Cl.: F16K 31/06

(54) **Electro magnetic valve for controlling the delivery of pressurized fluid**
Elektromagnetisches Ventil zum Steuern von Druckflüssigkeit
Soupape électromagnétique pour la commande de fluide sous pression

(30) Priority: 29.07.2005 IT MI20051496
(43) Date of publication of application: 31.01.2007
(73) Proprietor: Magri, Curzio Aldo, 24020 Gorle BG (IT)
(72) Inventor: Magri, Curzio Aldo, 24020 Gorle BG (IT)
(74) Representative: Alagem Modiano, Lara S.

(56) References cited:
- DE-A1- 10 261 610
- GB-A- 2 201 232
- US-A- 3 007 672

## Description

The present invention relates to an electric valve for controlling the delivery of pressurized fluid. More particularly, the invention relates to an in-line electric valve with complete separation, for controlling the delivery of pressurized fluid.

As is known, conventional electric valves for controlling the delivery of pressurized fluid have a longitudinal, i.e., in-line, internal fluid passage, in which the fluid necessarily comes into contact with the metallic parts of the electric valve; accordingly, such electric valves suffer problems linked to contamination of the fluid, jamming due to the action of impurities in the fluid and of scale, noise due to scale between the polar magnetic surfaces, and therefore known types of electric valve do not have optimum reliability and durability.

Such electric valves are e.g. known from GB-A-2 201 232.

The aim of the present invention is to provide an electric valve for controlling the delivery of pressurized fluid that allows to maintain total separation between the fluid that flows through the body of the electric valve and the metallic parts that drive the closure and opening of the electric valve.

Within this aim, an object of the present invention is to provide an electric valve for controlling the delivery of pressurized fluid in which the flow control element arranged in the delivery chamber of the valve is isolated by means of a pair of membranes.

Another object of the present invention is to provide an electric valve for controlling the delivery of pressurized fluid that is highly reliable, relatively simple to provide and at competitive costs.

This aim and these and other objects, which will become better apparent hereinafter, are achieved by an electric valve for controlling the delivery of pressurized fluid, comprising:
an electric valve body, which forms internally a fluid intake port and a delivery chamber which is rigidly coupled to a discharge duct which contains a discharge port;
a flow control element, which is supported by a shuttle arranged transversely with respect to the flow passage direction, the flow control element being movable in the fluid flow direction;
said flow control element being movable from an open position, in which it allows the connection of said intake port to said discharge port, to a closed position, in which the connection between said intake port and said discharge port is interrupted.
said shuttle, characterized in that is supported at the end by a guiding element, which is engaged with said shuttle and is separated therefrom by a pair of lateral membranes;

Further characteristics and advantages of the invention will become better apparent from the description of a preferred but not exclusive embodiment of the electric valve according to the present invention, illustrated by way of non-limiting example in the accompanying drawings, wherein:
Figure 1 is a longitudinal sectional view of the electric valve according to the present invention, in the open condition;
Figure 2 is a view, similar to Figure 1, of the electric valve according to the invention in the closed condition.

With reference to the figures, the electric valve according to the present invention, generally designated by the reference numeral 100, comprises an electric valve body 1, inside which, at opposite ends thereof, an intake port A and a discharge port C are provided, respectively to allow the inflow and outflow of a pressurized fluid.

The electric valve is provided with a flow control element 3, which is supported conveniently by an element 2 for supporting the flow control element, hereinafter referenced as flow control element supporting shuttle, which is arranged transversely with respect to the directions D in which the fluid flows within the body 1 of the valve.

Two lateral membranes 4 are arranged respectively laterally to the supporting element or shuttle 2 and are locked by retention elements 5 arranged respectively at the right and left lateral membranes.

The shuttle 2 is engaged in a shuttle guiding element 6, which is rigidly coupled, by means of a spring supporting element or spring holder 9, to a magnetic moving core 11, which is arranged along the discharge duct 21 of the valve body.

The upper spring holder 9 supports an upper spring 10, while a lower elastic element, constituted for example by a leaf spring 8, is arranged below the shuttle guiding element 6.

The electric valve further has a spool 13, a fixed core 12 arranged coaxially to the discharge duct 21, and a magnetic armature 15, which accommodates a coil 16.

An enclosure or container element 19 encloses all the parts of the electric valve on the valve body 1, with the interposition of at least one sealing O-ring 7.

Moreover, the electric valve is completed by the presence of an electronic part with contacts, designated schematically by the reference numeral 20.

With reference to the figures, operation of the electric valve according to the present invention is as follows.

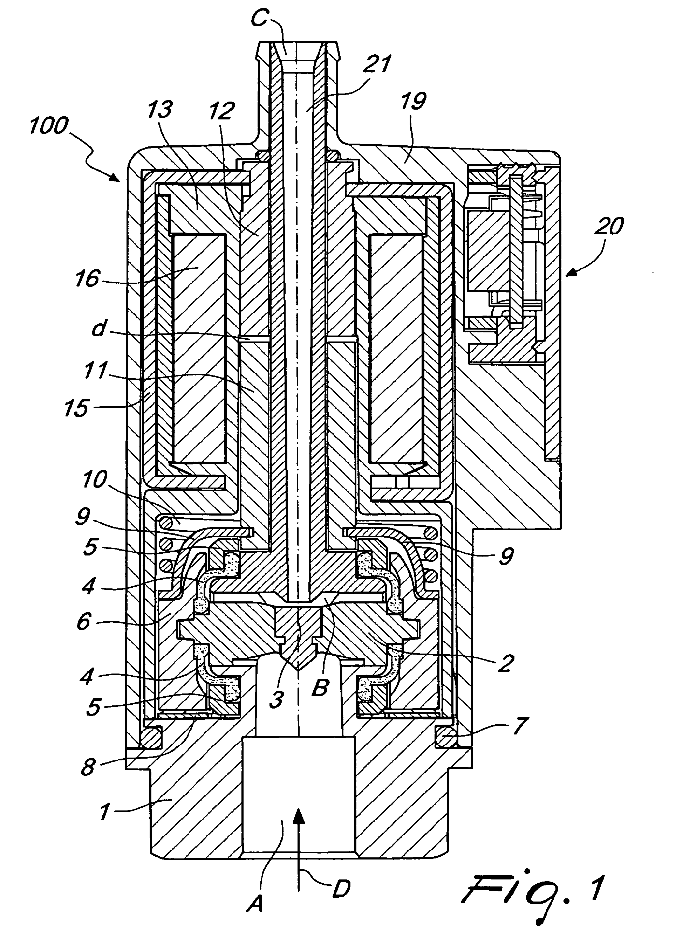

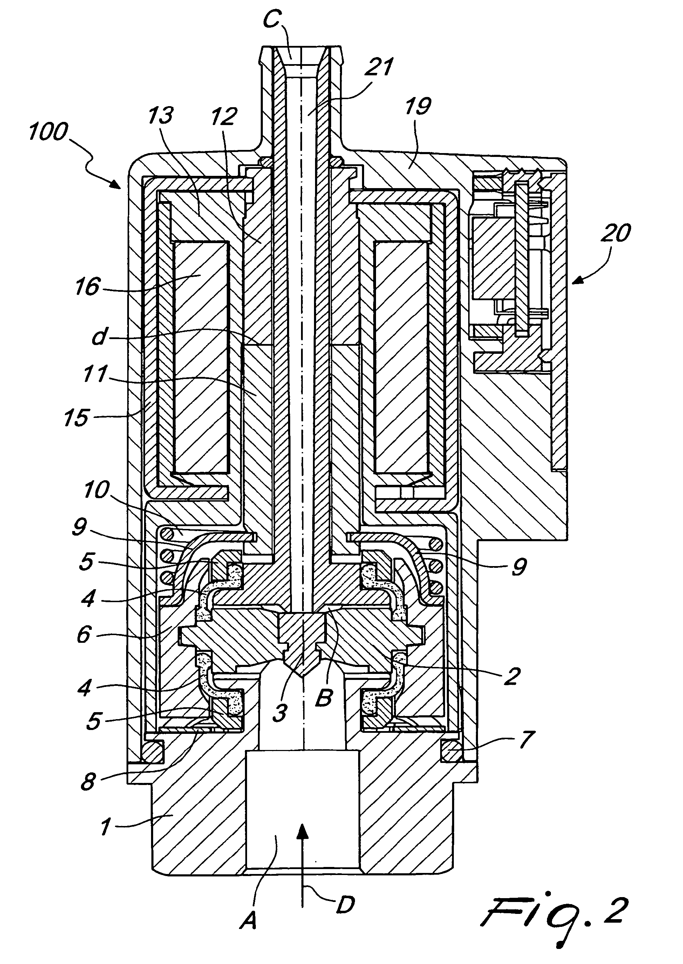

The electric valve has two states: the first one, shown in Figure 1, in which the electric valve is in the open condition, and the second one, shown in Figure 2, in which the electric valve is in the closed condition.

In the first state, the coil 16 of the electric valve is not powered, while in the second state it is. In the de-energized state, the electric valve is normally open.

In the inactive state, i.e., when the coil 16 is not powered, the moving core 11 is rigidly coupled to the upper spring holder 9 and the upper spring 10 acts on the spring holder 9, which pushes the guiding element 6, rigidly coupled to the shuttle 2 for supporting the flow control element 3, into the inactive position, overcoming the force of the lower spring 8 (leaf spring) and the force of the corresponding separation membranes 4, which are kept in their position by the retention elements 5.

Accordingly, the fluid flows from the intake port A of the body 1 of the valve and enters the duct of the delivery chamber, designated by the reference letter B, by passing through the shuttle 2 and flowing out toward the discharge C, again through the duct B of the delivery chamber.

In the energized state, the coil 16, due to the magnetic field generated by the flow of current across the winding 16 and concentrated in the fixed core 12, said fixed core 12 attracts the moving core 11, which performs a stroke indicated by the reference letter "d", overcoming the force of the upper spring 10, which performs the same movement stroke "d", allowing the shuttle 2, pushed by the lower spring 8, to close the duct B of the delivery chamber, as shown in Figure 2.

Accordingly, the fluid flows through the body in a longitudinal direction without said fluid coming into contact with the metallic parts that drive closure and opening, said parts being actuated by the electromagnet, the fluid flowing in line with respect to the magnetic means for actuating the valve.

In practice it has been found that the electric valve according to the invention achieves the intended aim and objects, since it allows to keep the fluid away from contact with the metallic actuation parts of the electric valve; moreover, the shuttle for supporting the flow control element is arranged in the delivery chamber B at right angles or transversely to the direction of advancement of the fluid, isolated externally by means of the flexible membranes 4, which allow its movement.

Furthermore, the delivery chamber B is formed monolithically or in a sole body and the intake passage A and discharge passage C for the fluid are formed therein.

The electric valve thus conceived is susceptible of numerous modifications and variations, all of which are within the scope of the appended claims; all the details may further be replaced with other technically equivalent elements.

Terms such as "upper" or "lower" used herein, are intended to refer for the mere purposes of description to the valve as shown in the figures. Therefore, they are not intended as imposing positional limitations onto the elements to which they refer.

In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electric valve for controlling the delivery of pressurized fluid, comprising:
an electric valve body (1), which forms internally a fluid intake port (A) and a delivery chamber (B) which is rigidly coupled to a discharge duct (21) which contains a discharge port (C);
a flow control element (3), which is supported by a shuttle (2) arranged transversely with respect to the flow passage direction (D), the flow control element (3) being movable in the fluid flow direction; said flow control element (3) being movable from an open position, in which it allows the connection of said intake port (A) to said discharge port (C), to a closed position, in which the connection between said intake port (A) and said discharge port (C) is interrupted.
**characterized in that**
said shuttle (2) is supported at its end by a guiding element (6), which is engaged with said shuttle (2) and is separated therefrom by a pair of lateral membranes (4);

2. The electric valve according to claim 1, **characterized in that** said delivery chamber (B) is formed monolithically.

3. The electric valve according to claim 1, **characterized in that** said guiding element (6) supports a spring holder (9), which is rigidly coupled to a moving core (11) arranged along the discharge duct (21) of the electric valve, said spring holder (9) supporting an upper spring (10).

4. The electric valve according to one or more of the preceding claims, **characterized in that** a lower spring (8) is arranged below said guiding element (6) engaged with said shuttle (2).

5. The electric valve according to one or more of the preceding claims, **characterized in that** it comprises a fixed core (12), which is arranged coaxially to said discharge duct (21) and is spaced from said moving core (11) when said flow control element (3) is in the open condition.

6. The electric valve according to one or more of the preceding claims, **characterized in that** it comprises retention elements (5) adapted to keep in position said membranes (4) arranged laterally to said shuttle (2) for supporting the flow control element (3).

7. The electric valve according to one or more of the preceding claims, **characterized in that** it comprises a spool (13) with a coil (16) which is adapted to be crossed by current.

8. The electric valve according to one or more of the preceding claims, **characterized in that** it comprises a container element (19) adapted to be coupled in an upward region with respect to said electric valve body (1).

## Patentansprüche

1. Elektroventil zum Steuern der Ausgabe von Druckflüssigkeit, umfassend:
einen Elektroventilkörper (1), welcher innenliegend eine Flüssigkeitseinlassöffnung (A) und eine Auslasskammer (B) bildet, die fest mit einem Austrittskanal (21) verbunden ist, der eine Austrittsöffnung (C) enthält;
ein Durchflusssteuerungselement (3), welches von einem hin- und hergehenden Körper (2) gehalten ist, der bezüglich der Flüssigkeitsströmungsrichtung (D) quer angeordnet ist, wobei das Durchflusssteuerungselement (3) in der Flüssigkeitsströmungsrichtung beweglich ist;
wobei das Durchflusssteuerungselement (3) aus einer Öffnungsposition, in welcher es die Verbindung der Einlassöffnung (A) mit der Austrittsöffnung (C) gestattet, zu einer Schließposition beweglich ist, in welcher die Verbindung zwischen der Einlassöffnung (A) und der Austrittsöffnung (C) unterbrochen ist;
**dadurch gekennzeichnet, dass** der hin- und hergehende Körper (2) an seinem Ende durch ein Führungselement (6) gelagert ist, welches mit dem hin- und hergehenden Körper (2) eingreift und davon durch ein Paar von seitlichen Membranen (4) getrennt ist.

2. Elektroventil nach Anspruch 1, **dadurch gekennzeichnet, dass** die Auslasskammer (B) monolithisch gebildet ist.

3. Elektroventil nach Anspruch 1, **dadurch gekennzeichnet, dass** das Führungselement (6) einen Federhalter (9) auflagert, welcher mit einem entlang des Austrittskanals (21) des Elektroventils angeordneten beweglichen Kern (11) fest verbunden ist, wobei der Federhalter (9) eine obere Feder (10) abstützt.

4. Elektroventil nach einem oder mehreren der vorangehenden Ansprüche, **dadurch gekennzeichnet, dass** eine untere Feder (8) unterhalb des Führungselements (6) mit dem hin- und hergehenden Körper (2) im Eingriff stehend angeordnet ist.

5. Elektroventil nach einem oder mehreren der vorangehenden Ansprüche, **dadurch gekennzeichnet, dass** es einen feststehenden Kern (12) umfasst, welcher koaxial zu dem Austrittskanal (21) angeordnet und von dem beweglichen Kern (11) beabstandet ist, wenn das Durchflusssteuerungselement (3) im Öffnungszustand ist.

6. Elektroventil nach einem oder mehreren der vorangehenden Ansprüche, **dadurch gekennzeichnet, dass** es Halteelemente (5) umfasst, angepasst die Membranen (4) in Position zu halten, angeordnet seitlich zum hin- und hergehenden Körper (2) für das Halten des Durchflusssteuerungselements (3).

7. Elektroventil nach einem oder mehreren der vorangehenden Ansprüche, **dadurch gekennzeichnet, dass** es einen Spulenkörper (13) mit einer Magnetspule (16) umfasst, welche dazu bestimmt ist, von einem Strom durchflossen zu werden.

8. Elektroventil nach einem oder mehreren der vorangehenden Ansprüche, **dadurch gekennzeichnet, dass** es ein Behälterelement (19) umfasst, angepasst in einem bezüglich des Elektroventilkörpers (1) oberen Bereich aufgesetzt zu werden.

## Revendications

1. Electrovanne pour commander la fourniture d'un fluide sous pression, comprenant :
un corps (1) d'électrovanne à l'intérieur duquel se trouvent un orifice d'admission (A) de fluide et une chambre de refoulement (B) qui fait corps avec un conduit de refoulement (21) comportant un orifice de refoulement (C) ;
un élément de commande d'écoulement (3), supporté par un organe à mouvement alternatif (2) disposé transversalement par rapport à la direction (D) de passage de flux, l'élément de commande d'écoulement (3) étant mobile dans la direction d'écoulement du fluide, ledit élément de commande d'écoulement (3) étant mobile entre une position ouverte, dans laquelle il permet la liaison entre ledit orifice d'admission (A) et ledit orifice de refoulement (C), et une position fermée, dans laquelle la liaison entre ledit orifice d'admission (A) et ledit orifice de refoulement (C) est interrompue ;
**caractérisée en ce que** ledit organe à mouvement alternatif (2) est supporté à son extrémité par un élément de guidage (6) qui est au contact dudit organe à mouvement alternatif (2) et en est séparé par une paire de membranes latérales (4).

2. Electrovanne selon la revendication 1, **caractérisée en ce que** ladite chambre de refoulement (B) est formée d'une seule pièce.

3. Electrovanne selon la revendication 1, **caractérisée en ce que** ledit élément de guidage (6) supporte un porte-ressort (9) qui fait corps avec un noyau mobile (11) disposé le long du conduit de refoulement (21) de l'électrovanne, ledit porte-ressort (9) supportant un ressort supérieur (10).

4. Electrovanne selon une ou plusieurs des revendications précédentes, **caractérisée en ce qu'**un ressort inférieur (8) est disposé sous ledit élément de guidage (6) au contact dudit organe à mouvement alternatif (2).

5. Electrovanne selon une ou plusieurs des revendications précédentes, **caractérisée, en ce qu**'elle comprend un noyau fixe (12), qui est disposé coaxialement audit conduit de refoulement (21) et est espacé dudit noyau mobile (11) lorsque ledit élément de commande d'écoulement (3) est dans l'état ouvert.

6. Electrovanne selon une ou plusieurs des revendications précédentes, **caractérisée en ce qu'**elle comprend des éléments de retenue (5) aptes à maintenir en place lesdites membranes (4) disposées latéralement par rapport audit organe à mouvement alternatif (2) pour supporter l'élément de commande d'écoulement (3).

7. Electrovanne selon une ou plusieurs des revendications précédentes, **caractérisée en ce qu'**elle comprend un tiroir (13) avec une bobine (16) apte à être traversée par un courant.

8. Electrovanne selon une ou plusieurs des revendications précédentes, **caractérisée en ce qu'**elle comprend un boîtier (19) apte à être monté dans une partie supérieure par rapport audit corps (1) de l'électrovanne.
